# EUROPÄISCHE PATENTSCHRIFT

(11) **EP 2 966 809 B1**
(45) Veröffentlichungstag und Bekanntmachung des Hinweises auf die Patenterteilung: **08.04.2020**
(21) Anmeldenummer: 15170271.9
(22) Anmeldetag: 02.06.2015
(51) Int. Cl.: H04L 12/40, H04L 29/06

(54) **VERFAHREN ZUM BETREIBEN EINES SYSTEMS MIT WENIGSTENS ZWEI MODULEN**
METHOD FOR OPERATING A SYSTEM WITH AT LEAST TWO MODULES
PROCÉDÉ DE FONCTIONNEMENT D'UN SYSTÈME AYANT AU MOINS DEUX MODULES

(30) Priorität: 11.07.2014 DE 102014213513
(43) Veröffentlichungstag der Anmeldung: 13.01.2016
(73) Patentinhaber: ROBERT BOSCH GMBH, 70442 Stuttgart (DE)
(72) Erfinder: Zuegel, Andreas, 73262 Reichenbach/Fils (DE)

(56) Entgegenhaltungen:
- DE-A1- 10 250 544
- US-A1- 2003 023 795
- US-A1- 2013 121 346
- US-B1- 8 588 991

## Beschreibung

Die Erfindung betrifft ein Verfahren zum Betreiben eines Systems mit wenigstens zwei Modulen. Die Erfindung betrifft weiterhin ein System aufweisend wenigstens zwei Module.

### Stand der Technik

Es ist bekannt, für Busteilnehmer, die an einen Datenbus angeschlossen sind, gleichzeitig eine "langsame" und eine "schnelle" Datenübertragung bereitzustellen. Beispiele dafür sind DSL (engl. digital subscriber line) sowie Ethernet-over-Powerline, die zwei Protokolle darstellen, die jeweils gleichzeitig eine Daten- und eine Sprachübertragung realisieren können. Bekannt sind ferner Systeme zur Sprach- und Datenübertragung über Stromleitungen, die von Energieversorgungsunternehmen im Zusammenhang mit Fernwirktechnik verwendet werden.

Bekannt sind ferner Heizungssysteme mit mehreren elektronischen Modulen, wobei die Module über einen Zweidrahtbus miteinander kommunizieren, wobei der Zweidrahtbus sowohl für eine Kommunikation der Module untereinander als auch zum Einspielen von aktueller Software auf die Module verwendet wird. Nachteilig ist hierbei, dass aufgrund der relativ geringen Datenrate ein Software-Update jedes Mal relativ lange dauern. Bekannt ist aus US8588991 B1 ein Energy Management System mit Herunterladen einer Funktion in ein Element des Verteilungsnetzes.

### Offenbarung der Erfindung

Es ist eine Aufgabe der vorliegenden Erfindung, ein verbessertes Verfahren zum Betreiben eines Systems mit über einen Datenbus verbundenen Modulen bereitzustellen. Der Datenbus ist ein Energy-Management-System-Bus, EMS-Bus.

Die Aufgabe wird gemäß einem ersten Aspekt gelöst mit einem Verfahren gemäß Anspruch 1.

Gemäß einem zweiten Aspekt wird die Aufgabe gelöst mit einem Thermotechnik-System gemäß Anspruch 5.

Die Erfindung hat den Vorteil, dass an einem Energy-Management-System-, EMS-, Bus zwei Protokolle für unterschiedliche Anwendungen verwendet werden. Das erste Protokoll wird für die Kommunikation der Module untereinander benutzt, wohingegen das zweite Protokoll zum Übertragen von Nutzdaten, z.B. für ein Einspielen von neuer Software (Software-Update, Software-Upgrade, usw.) auf wenigstens eines der Module verwendet wird. Das zweite Protokoll ist unabhängig vom ersten Protokoll, so dass eine völlig störungsfreie parallele Betriebsweise der beiden Protokolle vorgesehen ist.

Vorteilhafte Weiterbildungen des Verfahrens und des Systems sind Gegenstand von Unteransprüchen.

Eine vorteilhafte Weiterbildung des Verfahrens sieht vor, dass das erste Protokoll eine Datenrate zwischen ca. 8 kBit/s und ca. 15 kBit/s, vorzugsweise 9,6 kBit/s aufweist. Diese Datenraten werden in der Thermotechnik häufig verwendet und sind typisch der proprietäre EMS-Bus von Bosch-Thermotechnik.

Eine vorteilhafte Weiterbildung des Verfahrens sieht vor, dass das zweite Protokoll eine Datenrate von ca. 1 Mbit/s aufweist. Auf diese Weise ist vorteilhaft eine schnelle Datenübertragung, zum Beispiel zum Hochladen von Software auf die Module, möglich.

Eine weitere vorteilhafte Weiterbildung des Verfahrens sieht vor, dass die Übertragung von Nutzdaten mittels des zweiten Protokolls aus der Ferne oder vor Ort durchgeführt wird. Auf diese Weise ist vorteilhaft eine Anwendungsvielfalt des zweiten Protokolls vorteilhaft erhöht.

Eine bevorzugte Weiterbildung des Systems sieht vor, dass das zweite Protokoll zum Aktualisieren von Kommunikations-Software und/oder zum Aktualisieren von Steuerungs-Software der Module verwendet wird. Dadurch werden vorteilhaft mehrere Verwendungsfälle für das schnelle Protokoll ermöglicht.

Eine bevorzugte Weiterbildung des Systems sieht vor, dass der Datenbus als eine Zweidrahtleitung ausgebildet ist. Dadurch werden vorteilhaft unterschiedliche Implementierungsmöglichkeiten für den Datenbus bereitgestellt. Die Erfindung wird im Folgenden mit weiteren Merkmalen und Vorteilen anhand von zwei Figuren im Detail beschrieben. Dabei bilden alle Merkmale, unabhängig von ihrer Darstellung in der Beschreibung sowie in den Figuren, sowie unabhängig von ihrer Rückbeziehung in den Patentansprüchen den Gegenstand der Erfindung. Gleiche oder funktionsgleiche Elemente sind mit gleichen Bezugszeichen versehen.

In den Figuren zeigt:
- Fig. 1: ein Übersichtschaltbild über eine Ausführungsform des erfindungsgemäßen Systems; und
- Fig. 2: einen prinzipiellen Ablauf einer Ausführungsform des erfindungsgemäßen Verfahrens.

### Beschreibung von Ausführungsformen

Im Bereich der Thermo-Technik ist der so genannte EMS-Systembus (engl. energy management system) weit verbreitet, welcher Aufgaben der Vernetzung der einzelnen Module erfüllt. Der genannte Bus stellt einen Datenbus mit einer relativ geringen Übertragungsgeschwindigkeit dar und ist daher für zusätzliche Anforderungen, wie z.B. Software-Updates nur begrenzt geeignet. Eine Verlegung einer zweiten Busleitung mit einem schnelleren Bus ist vielfach nicht möglich, da dadurch bauliche Maßnahmen notwendig wären, die von Kunden in den meisten Fällen nicht erwünscht sind.

Erfindungsgemäß ist deshalb vorgesehen, in den Modulen Kommunikationseinrichtungen KE1 ...KEn vorzusehen, welche in der Lage sind, gleichzeitig ein schnelles und ein langsames Kommunikationsprotokoll abzuarbeiten. Die Kommunikationseinrichtungen KE1..KEn sind dabei als elektronische Komponenten ausgebildet, mit denen eine modulierte Datenübertragung möglich ist.

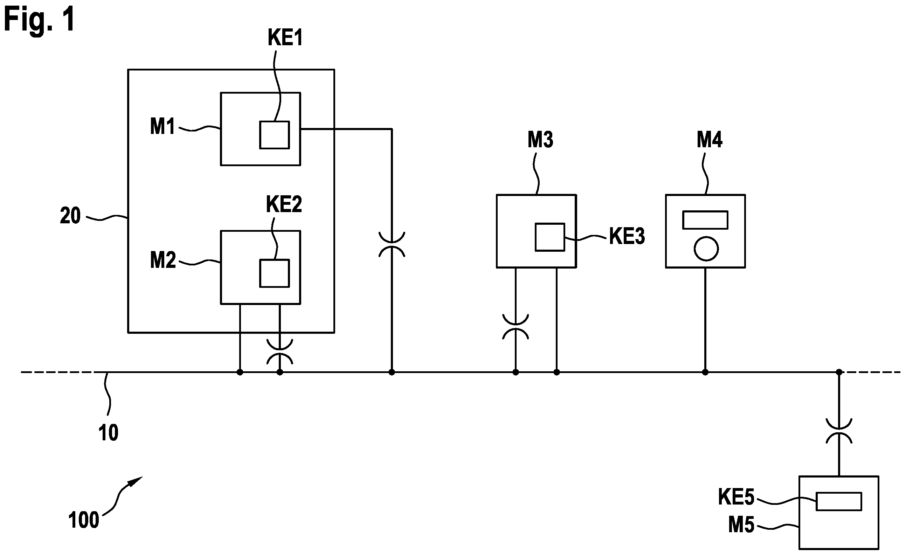

Fig. 1 zeigt eine derartige Anordnung mit einem System 100, das als ein Thermotechnik-System ausgebildet ist. Man erkennt verschiedene an einen Datenbus 10 angeschlossene Module M1...Mn, wobei mehrere der Module M1...Mn auch zu Einheiten zusammengefasst sein können. Eine Buseinheit 20 stellt dabei eine Heizungs- oder eine Kälte- bzw. Klimaeinheit dar. Das Modul M1 der Buseinheit 20 kann als ein Mensch-Maschinen-Interface ausgebildet sein, welches in der Lage ist, verschiedene Eingabesignale zu verarbeiten bzw. auszutauschen. Das Modul M2 innerhalb der Buseinheit 20 kann als eine Steuerungsbox ausgebildet sein, die verschiedene Steuerungsfunktionen übernimmt. Das Modul M3 kann Systemfunktionen beinhalten, mit denen verschiedene Aufgaben des Systems 100 gesteuert werden. Das Modul M4 ist eine Einheit, über die mittels einer manuellen Betätigung eine gewünschte Raumtemperatur bzw. eine Vorlauftemperatur eines Heizkreislaufs eingestellt werden kann. Das Modul M5 kann als ein Aktualisierungsmodul ausgebildet sein, das mit dem Datenbus 10 verbindbar ist und mit dessen Hilfe Software aus dem Modul M5 in das zu aktualisierende Modul M1, M2, M3 eingespielt werden kann. Der Datenbus 10 kann beispielsweise als ein Zweidrahtbus mit Kupfer ausgebildet sein.

Jedes der Module M1, M2, M3 und M4 kann mit einem anderen am Datenbus 10 angeschlossenen Modul M1, M2, M3, M4 mittels eines ersten Protokolls P1 untereinander kommunizieren, wobei eine Datenrate des ersten Protokolls P1 in einem Bereich zwischen ca. 8 kBit/s und ca. 15 kBit/s, vorzugsweise 9,6 kBit/s liegt. Dies entspricht einer typischen Kommunikationsgeschwindigkeit, die mit einem Modem bereitgestellt wird und in Fig. 1 mit einer durchgezogenen Verbindung zwischen dem Modul und dem Datenbus 10 angedeutet ist.

Wenigstens einer der Module M1, M2, M3 und M5 wird über ein zweites Protokoll P2 betrieben. Das genannte zweite Protokoll P2 kann eine schnelle Nutzdatenübertragung, z.B. mit einer Datenrate von ca. 1 Mbit/s auf die Module ermöglichen. Man erkennt, dass die Module M1, M2, M3 und M5 zu diesem Zweck jeweils eine entkoppelbare Anbindung an den Datenbus 10 aufweisen, was mit einer unterbrochen dargestellten Anbindung an den Datenbus 10 angedeutet ist. Auf diese Weise kann eine hochfrequente Datenübertragung zwischen den Modulen M1...Mn realisiert werden. Beispielweise sind jedoch in Abhängigkeit von einer Modulationsart auch noch zusätzliche, unterschiedliche Datenraten für die Protokolle P1 und P2 möglich.

Alternativ ist es gegenüber der beschriebenen Anwendung vor Ort auch möglich, dass die Einspielung der zu aktualisierenden Software mittels Fernwartung erfolgt (nicht dargestellt). Zu diesem Zweck kann beispielsweise eine Netzwerkverbindung (z.B. via Internet) zu einer Verbindung mit dem Datenbus 10 aufgebaut werden, um die zu aktualisierenden Daten in die Module M1 bis Mn einzuspielen.

Auf diese Weise kann im Ergebnis vorteilhaft eine voneinander entkoppelte schnelle und langsame Datenübertragung in einer Thermotechnik-Anwendung bereitgestellt werden, bei dem eine zusätzliche Verlegung einer zweiten Leitung vermieden werden kann.

Vorteilhaft ist dadurch eine Rückwärtskompatibilität in ältere Systemversionen unterstützt, wodurch vorteilhaft eine Aufwertung des bestehenden EMS-Protokolls ermöglicht ist. Die Updates werden mittels Dateien durchgeführt, die ca. 1 Mbyte bis 2 MByte groß sind, die von der erhöhten Busgeschwindigkeit mittels des zweiten Protokolls P2 profitieren.

Erfindungsgemäß kann durch eine hochfrequente Aufmodulierung der schnelleren Businformationen auf das bereits vom EMS-Bus benutzte Kabel erstens eine Neuverlegung von zusätzlichen Kabeln bzw. Drähten vermieden werden, zudem kann die bekannte Verdrahtung in den Produkten durch den Installateur beibehalten werden. Dadurch sind Fehlverdrahtungen vorteilhaft weitgehend ausgeschlossen, weil der Installateur wie gewohnt verdrahten kann. Für den Kunden ergeben sich vorteilhaft ebenfalls keine Unterschiede.

Zudem eröffnet die Erfindung für zukünftige Entwicklungen einen gezielten Ein- bzw. Umstieg in eine neue Technologie der Buskommunikation, wenn der bestehende EMS-Bus abgelöst werden muss, da er die Anforderungen nicht mehr erfüllen kann.

Die Technik der Modulation der Daten mittels des zweiten Protokolls P2 ist gut bekannter Stand der Technik, der beispielweise mittels DSL realisiert ist, so dass eine einfache und zuverlässige technische Umsetzung des erfindungsgemäßen Systems möglich ist.

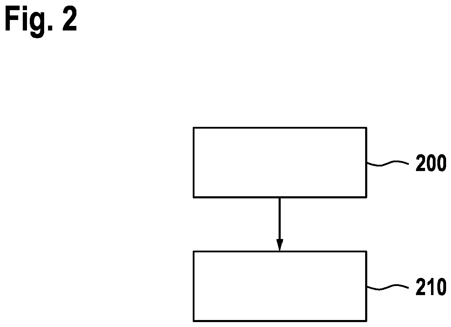

Fig. 2 zeigt einen prinzipiellen Ablauf einer Ausführungsform des erfindungsgemäßen Verfahrens zum Betreiben eines Systems 100 mit wenigstens zwei Modulen M1...Mn, wobei die Module M1...Mn an einen Datenbus 10 angeschlossen sind.

In einem ersten Schritt 200 wird ein erstes Protokoll P1 für eine Kommunikation zwischen den Modulen M1...Mn verwendet.

In einem zweiten Schritt 210 wird ein zweites Protokoll P2 zum Übertragen von Nutzdaten auf wenigstens eines der Module M1...Mn verwendet, wobei die beiden Protokolle P1, P2 voneinander unabhängig verwendet werden.

Zusammenfassend wird mit der vorliegenden Erfindung ein Evolutionsschritt für bestehende Heizungssysteme verwirklicht, in dem bestehenden Leitungen weiterbenutzt werden können, wobei über die bestehenden Leitungen ein schnelles Protokoll betrieben wird, das insbesondere für Software-Updates verwendet wird.

Vorteilhaft können dadurch Servicekosten minimiert werden, weil erforderliche Updates wesentlich schneller durchgeführt werden können.
Beispielsweise kann dies mit einem Aufrüsten von bestehenden Systemen mit Hardware erreicht werden, die die schnelle Datenübertragung mittels des schnellen Protokolls P2 implementieren.

Obwohl die Erfindung vorgehend anhand von konkreten Ausführungsbeispielen beschrieben worden ist, ist sie keineswegs darauf beschränkt. Der Fachmann wird somit die vorgehend beschriebenen Merkmale geeignet abändern und miteinander kombinieren können, ohne vom Kern der Erfindung abzuweichen.

## Patentansprüche

1. Verfahren zum Betreiben eines Thermotechnik-Systems (100) mit wenigstens zwei Modulen (M1..Mn), wobei die Module (M1...Mn) an einen Energy-Management-System-,EMS-, Bus (10) angeschlossen sind, wobei die Module (M1...Mn) jeweils eine entkoppelbare Anbindung an den EMS-Bus (10) aufweisen; aufweisend die Schritte:
- Kommunizieren zwischen den Modulen (M1... Mn) mittels dem EMS-Bus mittels eines ersten Protokolls (P1); und
- Übertragen von Nutzdaten auf wenigstens eines der Module (M1... Mn) mittels dem EMS-Bus mittels eines zweiten Protokolls, wobei die beiden Protokolle (P1, P2) voneinander unabhängig verwendet werden.

2. Verfahren nach Anspruch 1, wobei das erste Protokoll (P1) eine Datenrate zwischen ca. 8 kBit/s und ca. 15 kBit/s, vorzugsweise 9,6 kBit/s aufweist.

3. Verfahren nach Anspruch 1 oder 2, wobei das zweite Protokoll (P2) eine Datenrate von ca. 1 MBit/s aufweist.

4. Verfahren nach einem der Ansprüche 1 bis 3, wobei die Übertragung von Nutzdaten auf das Modul (M1...Mn) mittels des zweiten Protokolls (P2) aus der Ferne oder vor Ort durchgeführt wird.

5. Thermotechnik-System (100), aufweisend wenigstens zwei Module (M1...Mn), aufweisend:
- einen Energy-Management-System-,EMS-, Bus (10), an den die Module (M1... Mn) anschließbar sind, wobei die wenigstens zwei Module (M1...Mn) jeweils eine Kommunikationseinrichtung (KE1..KEn) aufweisen, wobei die Module (M1...Mn) mittels der Kommunikationseinrichtung (KE1... KEn) und zweier unterschiedlicher Protokolle (P1, P2) unter Verwendung des EMS-Busses, betreibbar sind, wobei die beiden Protokolle (P1, P2) für die Module (M1...Mn) voneinander unabhängig verwendbar sind, wobei die Module (M1... Mn) jeweils eine entkoppelbare Anbindung an den EMS-Bus (10) aufweisen.

6. Thermotechnik-System (100) nach Anspruch 5, **dadurch gekennzeichnet, dass** das erste Protokoll (P1) für eine Kommunikation zwischen den Modulen (M1...Mn), und wobei das zweite Protokoll (P2) zum Übertragen von Nutzdaten auf die Module (M1...Mn) verwendet wird.

7. Thermotechnik-System (100) nach Anspruch 5 oder 6, wobei das zweite Protokoll (P2) zum Aktualisieren von Kommunikations-Software und/oder zum Aktualisieren von Steuerungs-Software der Module (M1...Mn) verwendet wird.

8. Thermotechnik-System (100) nach einem der Ansprüche 5 bis 7, wobei der EMS-Bus (10) als eine Zweidrahtleitung ausgebildet ist.

## Claims

1. Method for operating a thermotechnology system (100) comprising at least two modules (M1...Mn), wherein the modules (M1...Mn) are connected to an energy management system, EMS, bus (10), wherein the modules (M1...Mn) each have a decoupleable connection to the EMS bus (10), comprising the steps of:
- communicating between the modules (M1...Mn) by means of the EMS bus by means of a first protocol (P1); and
- transmitting useful data to at least one of the modules (M1...Mn) by means of the EMS bus by means of a second protocol, wherein the two protocols (P1, P2) are used independently of one another.

2. Method according to Claim 1, wherein the first protocol (P1) has a data rate of between approximately 8 kbit/s and approximately 15 kbit/s, preferably 9.6 kbit/s.

3. Method according to Claim 1 or 2, wherein the second protocol (P2) has a data rate of approximately 1 Mbit/s.

4. Method according to one of Claims 1 to 3, wherein the transmission of useful data to the module (M1...Mn) is carried out by means of the second protocol (P2) remotely or on site.

5. Thermotechnology system (100), having at least two modules (M1...Mn), comprising:
- an energy management system, EMS, bus (10) to which the modules (M1...Mn) can be connected, wherein the at least two modules (M1...Mn) each have a communications device (KE1...KEn), wherein the modules (M1...Mn) can be operated by means of the communications device (KE1...KEn) and two different protocols (P1, P2) using the EMS bus, wherein the two protocols (P1, P2) for the modules (M1...Mn) can be used independently of one another, wherein the modules (M1...Mn) each have a decoupleable connection to the EMS bus (10).

6. Thermotechnology system (100) according to Claim 5, **characterized in that** the first protocol (P1) is used for communication between the modules (M1...Mn), and wherein the second protocol (P2) is used for transmitting useful data to the modules (M1...Mn).

7. Thermotechnology system (100) according to Claim 5 or 6, wherein the second protocol (P2) is used for updating communications software and/or for updating control software of the modules (M1...Mn).

8. Thermotechnology system (100) according to one of Claims 5 to 7, wherein the EMS bus (10) is designed as a two-wire line.

## Revendications

1. Procédé pour faire fonctionner un système thermotechnique (100) comprenant au moins deux modules (M1..Mn), les modules (M1..Mn) étant raccordés à un bus de système de gestion de l'énergie, EMS, (10), les modules (M1..Mn) possédant respectivement une liaison déconnectable au bus EMS (10) ; comprenant les étapes suivantes :
- communication entre les modules (M1..Mn) au moyen du bus EMS à l'aide d'un premier protocole (P1) ; et
- transmission de données utiles sur au moins l'un des modules (M1..Mn) au moyen du bus EMS à l'aide d'un deuxième protocole, les deux protocoles (P1, P2) étant utilisés indépendamment l'un de l'autre.

2. Procédé selon la revendication 1, le premier protocole (P1) possédant un débit de données entre environ 8 kbit/s et environ 15 kbit/s, de préférence de 9,6 kbit/s.

3. Procédé selon la revendication 1 ou 2, le deuxième protocole (P2) possédant un débit de données d'environ 1 Mbit/s.

4. Procédé selon l'une des revendications 1 à 3, la transmission de données utiles sur le module (M1..Mn) à l'aide du deuxième protocole (P2) s'effectuant à distance ou sur site.

5. Système thermotechnique (100) possédant au moins deux modules (M1..Mn), comprenant :
- un bus de système de gestion de l'énergie, EMS, (10), auquel peuvent être raccordés les modules (M1..Mn), les modules (M1..Mn) possédant respectivement un dispositif de communication (KE1..KEn), les modules (M1..Mn) pouvant fonctionner au moyen du dispositif de communication (KE1..KEn) et deux protocoles (P1, P2) différents en utilisant le bus EMS, les deux protocoles (P1, P2) pouvant être utilisés indépendamment l'un de l'autre pour les modules (M1..Mn), les modules (M1..Mn) possédant respectivement une liaison déconnectable au bus EMS (10).

6. Système thermotechnique (100) selon la revendication 5, **caractérisé en ce que** le premier protocole (P1) est utilisé pour une communication entre les modules (M1..Mn), et le deuxième protocole (P2) pour la transmission de données utiles sur modules (M1..Mn).

7. Système thermotechnique (100) selon la revendication 5 ou 6, le deuxième protocole (P2) étant utilisé pour l'actualisation de logiciels de communication et/ou pour l'actualisation de logiciels de commande des modules (M1..Mn).

8. Système thermotechnique (100) selon l'une des revendications 5 à 7, le bus EMS (10) étant réalisé sous la forme d'un câble bifilaire.
